# EUROPÄISCHE PATENTANMELDUNG

(11) **EP 2 148 419 A2**
(43) Veröffentlichungstag der Anmeldung: **27.01.2010**
(21) Anmeldenummer: 09008706.5
(22) Anmeldetag: 03.07.2009
(51) Int. Cl.: H02M 7/48

(54) **Stromrichteranordnung für Solarstromanlagen und Ansteuerverfahren hierzu**

(30) Priorität: 26.07.2008 DE 102008034955
(71) Anmelder: Semikron Elektronik GmbH & Co. KG Patentabteilung, 90431 Nürnberg (DE)
(72) Erfinder: Schreiber, Dejan, 90408 Nürnberg (DE)

(57) **Zusammenfassung**

Die Erfindung beschreibt eine Stromrichteranordnung mit einem zeitlich variierenden eine Maximalspannung aufweisenden Gleichspannungseingang, vorzugsweise aus einer Solarzellenanordnung, mit einem Pegelwandler und mit mindestens einem mit einem Stromnetz verbindbaren Wechselrichter. Hierbei ist der positive Eingangspol des Gleichspannungseingang mit einem ersten Schalter und der Anode einer ersten Diode verbunden. Der negative Eingangspol des Gleichspannungseingang ist mit einem zweiten Schalter und der Kathode einer zweiten Diode verbunden. Die Kathode der ersten Diode ist mit einem ersten Kondensator, die Anode der zweiten Diode mit einem zweiten Kondensator verbunden. Weiterhin sind jeweils die beiden Schalter und die beiden Kondensatoren miteinander und deren Mittelanzapfungen miteinander verbunden. Diese Anordnung bildet den Pegelwandler aus, der mit dem mindestens einen nachgeschalteten Wechselrichter verbunden ist. Das erfindungsgemäß Ansteuerverfahren lädt den ersten und zweiten Kondensator unabhängig von der Eingangsspannung mit jeweils dem halben Wert der Sollzwischenkreisspannung geladen werden.

## Beschreibung

Die Erfindung betrifft ein Ansteuerverfahren für und eine Stromrichteranordnung mit einem Gleichspannungseingang, dessen Spannungswert zeitlich variiert, vorzugsweise gespeist aus einer Solarzellenanordnung und mit einem Wechselspannungsausgang. Grundsätzlich eignet sich eine derartige Stromrichteranordnung für jegliche Anwendung mit zeitlich nicht konstanter Eingangsgleichspannung.

Es ist bekannt Solarzellenanordnungen derart auszubilden, dass die Einzelpanele in einer zweidimensionalen Matrix angeordnet sind und hierbei die Einzelpanele einzelner Spalten oder Reihen dieser Matrix seriell miteinander verbunden sind und somit eine Solarpanelkette bilden. Weiterhin ist es bekannt derartige Solarpanelketten parallel zu verbinden und den hierbei die Ausgangspole dieser Verbindung mittels eines Wechselrichters mit dem Stromnetz zu verbinden um Strom in das angeschlossene Stromnetz einzuspeisen. Eine derartige Solarstromanlage weist die Vorteile eines geringen schaltungstechnischen Aufwands und einer geringen Anzahl an leistungselektronischen Komponenten auf.

Grundsätzlich nachteilig bei Solarpanelen ist allerdings, dass deren Ausgangsspannung wie auch deren Ausgangsleistung stark mit der effektiven Beleuchtungsstärke variieren. Besonders nachteilig bei der genannten Solarstromanlage ist, dass bereits die Abschattung eines Einzelpanels zu einer stark überproportionalen Reduktion der Ausgangsleistung einer Solarpanelkette führt. Somit ist der reale Wirkungsgrad einer derartigen Solarstromanlage weit geringer als der theoretische maximale Wirkungsgrad bei gegebener Beleuchtungsstärke.

Ebenso ist es bekannt, einzelne Solarpanelketten direkt mit einem zugeordneten Wechselrichter zu verbinden und die Wechselspannungsausgänge dieser einzelnen Wechselrichter mit dem zu speisenden Stromnetz zu verbinden. Hierbei ist für diese Ausgestaltung der Solarstromanlage der schaltungstechnische Aufwand und speziell die Anzahl der leistungselektronischen Komponenten wesentlich höher als in der erst genannten Ausgestaltung. Vorteilhafterweise bedingt dieser Aufwand allerdings auch einen höheren realen Wirkungsgrad.

Einen optimalen Wirkungsgrad bei gleichzeitig höchstem Aufwand würde eine Solarstromanlage mit einem Wechselrichter pro Einzelpanel erreichen. Durch diesen hohen Aufwand ist diese Ausgestaltung allerdings wirtschaftlich weniger sinnvoll.

Der Erfindung liegt die Aufgabe zugrunde eine Stromrichteranordnung vorzustellen, die zur Weiterbildung einer Solarstromanlage bei einem verbesserten Verhältnis aus realem Wirkungsgrad und schaltungstechnischem Aufwand dient.

Diese Aufgabe wird erfindungsgemäß gelöst, durch den Gegenstand mit den Merkmalen des Anspruchs 1 sowie durch ein Verfahren nach Anspruch 6. Bevorzugte Ausführungsformen sind in den abhängigen Ansprüchen beschrieben.

Den Ausgangspunkt der Erfindung bilden Solarstromanlagen vorzugsweise mit einer Mehrzahl von Solarpanelketten, jede mit einem zeitlich variierenden Gleichspannungsausgang, die seriell verbunden sind und somit eine zeitlich variierende Gleichspannungssummenausgang aufweisen. Dieser Gleichspannungssummenausgang mit einem definierten Maximalwert bildet den Gleichspannungseingang der erfindungsgemäßen Stromrichteranordnung.

Diese Stromrichteranordnung weist weiterhin mindestens einen Pegelwandler und mindestens einen mit einem Stromnetz verbindbaren Wechselrichter auf. Der positive Eingangspol des Gleichspannungseingangs ist mit einem ersten Schalter und der Anode einer ersten Diode verbunden. Weiterhin ist der negative Eingangspol des Gleichspannungseingangs mit einem zweiten Schalter und der Kathode einer zweiten Diode verbunden. Die Kathode der ersten Diode ist mit einem ersten Kondensator, die Anode der zweiten Diode ist mit einem zweiten Kondensator verbunden. Gleichfalls sind jeweils die beiden Schalter und die beiden Kondensatoren miteinander und deren Mittelanzapfungen miteinander und bevorzugt auch mit Grundpotential verbunden. Diese Anordnung bildet somit den Pegelwandler aus.

Es kann bevorzugt sein einen ersten Wechselrichter mit dem ersten Kondensator und einen zweiten Wechselrichter mit dem zweiten Kondensator zu verbinden, wodurch der erste Eingang des ersten Wechselrichters mit dem ersten Ausgang des Pegelwandlers verbunden ist und der zweiter Eingang des Wechselrichts mit der Mittelanzapfung der Schalter sowie der Kondensatoren verbunden ist Der zweite Wechselrichter ist somit mit seinem ersten Eingang mit der Mittelanzapfung der Schalter sowie der Kondensatoren verbunden und mit seinem zweiten Eingang mit dem zweiten Ausgang des Pegelwandlers verbunden ist. Ebenso kann es bevorzugt sein, die Eingänge eines Wechselrichters mit den beiden Ausgängen des Pegelwandler zu verbinden.

Es kann weiterhin bevorzugt sein mindestens einen Eingangspol des Gleichspannungseingangs mit einer Spule zu verbinden. Alternativ kann die parasitäre Induktivität der verbindbaren Gleichspannungszuleitung deren Funktion im Rahmen des zugeordneten Verfahrens übernehmen.

Das erfindungsgemäße Verfahren zur Ansteuerung der genannte Stromrichteranordnung kennt zwei wesentliche Betriebszustände. Solange am Gleichspannungseingang eine Spannung anliegt, die gleich oder höher ist als die Sollzwischenkreisspannung wird der Pegelwandler nicht angesteuert. Falls am Gleichspannungseingang eine Spannung anliegt, die geringer ist als die Sollzwischenkreisspannung wird er Pegelwandler derart angesteuert, dass sich ein Modulationsfaktor von 1 ergibt und hierdurch der erste und zweite Kondensator mit jeweils dem halben Wert der Sollzwischenkreisspannung (VdcS) geladen werden. Der Modulationsfaktor ist das gewichtete Verhältnis aus den Werten der Wechselspannung, genauer die Phasenspannung am Ausgang, und der Zwischenkreisspannung. Hierzu gibt es weiterhin drei Teilbetriebszustände:
- Bei einer Eingangsgleichspannung kleiner dem halben Wert der Sollzwischenkreisspannung werden der erste und zweite Schalter des Pegelwandlers derart angesteuert, dass die Einschaltzeit der beiden Schalter sich überlappen also immer mindestens ein Schalter eingeschaltet ist, wobei die Einschaltphasen alternierend gewählt sind.
- Bei einer Eingangsgleichspannung gleich dem halben Wert der Sollzwischenkreisspannung werden der erste und zweite Schalter des Pegelwandlers derart angesteuert, dass die Einschaltzeit der beiden Schalter jeweils eine halbe Schaltperiode lang ist, wobei wiederum die Einschaltphasen alternierend gewählt sind.
- Bei einer Eingangsgleichspannung größer dem halben Wert der Sollzwischenkreisspannung werden der erste und zweite Schalter des Pegelwandlers derart angesteuert, dass die Einschaltzeit der beiden Schalter geringer als eine halbe Schaltperiode, also es Zeiten gibt zu denen kein Schalter eingeschalten ist, wobei die Einschaltphasen ebenfalls alternierend gewählt sind.

Der mindestens eine dem Pegelandler nachgeschaltete Wechselrichter arbeitet im zweiten Betriebszustand immer unabhängig von der Eingangsgleichspannung zu jedem Betriebszeitpunkt mit einer annähernd konstanten Zwischenkreisspannung der Sollzwischenkreisspannug, die hier der Summe der beiden Kondensatorspannungen ist. Somit ist gewährleistet, dass der Modulationsfaktor annährend 1 ist und der Wechselrichter mit optimalem Wirkungsgrad arbeitet..

Die erfindungsgemäße Ausgestaltung der Stromrichteranordnung weist in Verbindung mit dem erfindungsgemäßen Verfahren den Vorteil auf, dass eine mit dieser Stromrichteranordnung hergestellte Solarstromanlage ein verbessertes Verhältnis aus realem Wirkungsgrad und schaltungstechnischem Aufwand aufweist.

Die erfindungsgemäße Stromrichteranordnung und das dazugehörige Verfahren erlauben es zusätzlich auf Spannungsschwankungen des Stromnetzes derart zu reagieren, dass diese gemessen werden hierdurch die Sollzwischenkreisspannung angepasst wird und hieraus die Ansteuerung des Pegelwandlers derart geändert wird, dass in engen Grenzen ein Modulationsfaktor von annährend 1 erreicht werden kann.

Besonders bevorzugte Weiterbildungen dieser Schaltungsanordnung und deren Ansteuerverfahren sind in der jeweiligen Beschreibung der Ausführungsbeispiele genannt. Die erfinderische Lösung wird zudem an Hand der Ausführungsbeispiele der Fig. 1 bis 3 weiter erläutert.

Fig. 1 zeigt die erfindungsgemäße Stromrichteranordnung in einer ersten Ausgestaltung einer Solarstromanlage.

Fig. 2 zeigt die erfindungsgemäße Stromrichteranordnung in einer zweiten Ausgestaltung einer Solarstromanlage.

Fig. 3 zeigt verschiedene Spannungsverläufe bei Anwendung des erfindungsgemäßen Verfahrens.

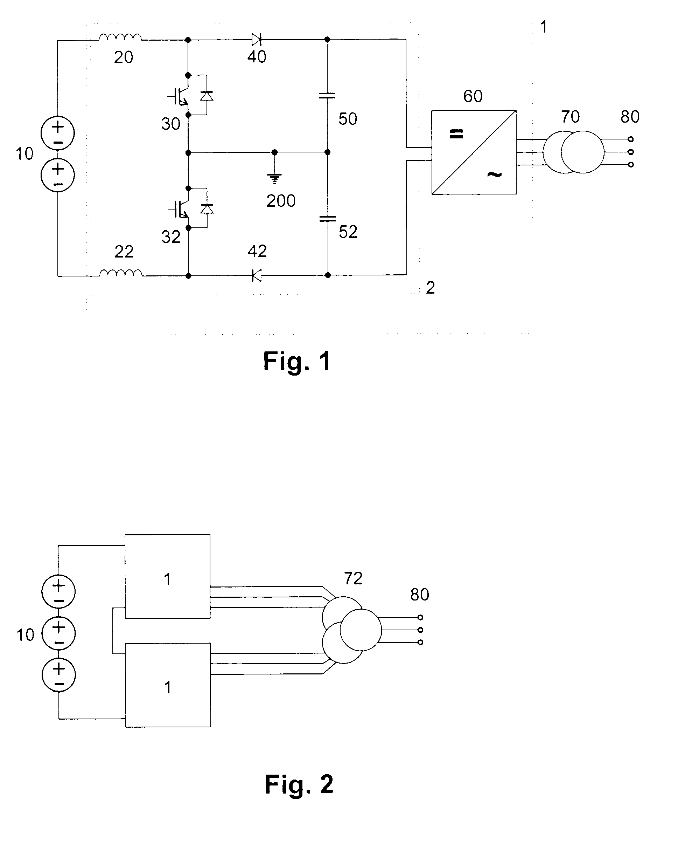

Fig. 1 zeigt die erfindungsgemäße Stromrichteranordnung (1) in einer ersten Ausgestaltung einer Solarstromanlage. Diese Solarstromanlage weist als Spannungsquelle (10) eine Solarzellenanordnungen in Ausgestaltung einer Anordnung von Solarpanelketten auf, die derart miteinander verbunden sind, dass diese Solarzellenanordnungen eine zeitlich variierende Ausgangsspannung zwischen 0V und 1200V oder zwischen 300V und 1200V aufweist.

Der Pegelwandler (2) der Stromrichteranordnung (1) weist einen Gleichspannungseingang auf. Der positive Eingangspol dieses Gleichspannungseingang ist mit einem ersten Schalter (30) und der Anode einer ersten Diode (40) verbunden. Weiterhin ist der negative Eingangspol des Gleichspannungseingang mit einem zweiten Schalter (32) und der Kathode einer zweiten Diode (42) verbunden. Die Kathode der ersten Diode (40) ist mit einem ersten Kondensator (50), die Anode der zweiten Diode (42) ist mit einem zweiten Kondensator (52) verbunden. Gleichfalls sind jeweils die beiden Schalter (30, 32) und die beiden Kondensatoren (50, 52) miteinander und deren Mittelanzapfungen miteinander und mit Grundpotential (200) verbunden. Der erste und zweite Schalter (30, 32) sind bekannte Leistungshalbleiterbauelement, beispielhaft IGBTs mit jeweils antiparallel geschalteter Freilaufdiode.

Als Wechselrichter (60) der erfindungsgemäßen Stromrichteranordnung (1) ist ein dreiphasen Wechselrichter vorgesehen, aufgebaut aus Leistungshalbleiterbauelementen der Spannungsklasse 1200V. Dieser Wechselrichter (60) weist einen Ausgang zu einem Transformator mit der Eingangsspannung 3 x 400V (70) auf und speist über diesen ein Stromnetz (80). Der Wechselrichter (60) weist dann einen hohen Wirkungsgrad von bis zu 99 von 100 auf, falls die Zwischenkreisspannung nur geringfügig, nicht mehr als 10 von 100 um den notwendigen Wert von 650V schwankt.

Demgegenüber kann die Eingangsspannung, wie auch der Eingangsstrom, der Stromrichteranordnung (1) bedingt durch Abschattungen schnell und bedingt durch unterschiedliche Beleuchtungsstärke im Tagesverlauf langsam im oben genannten Bereich schwanken. Das erfindungsgemäße Verfahren zur Ansteuerung dieser Stromrichteranordnung (1) trägt diesem dahingehend Rechnung, dass die Kondensatoren (50, 52) derart geladen werden, damit ihre Summenspannung in denjenigen Betriebszeiträumen in denen die Eingangsspannung unterhalb der Sollzwischenkreisspannung liegt des Wechselrichters (60) eben diese entspricht.

Fig. 2 zeigt die erfindungsgemäße Stromrichteranordnung (1) in einer zweiten Ausgestaltung einer Solarstromanlage. Hierbei sind anstelle der zu Fig. 1 beschriebenen Ausgestaltung zwei Wechselrichter (2) seriell mit der Solarzellenanordnung (10) verbunden und speisen gemeinsam einen geeigneten Transformator (72) zur Einspeisung in das Stromnetz (80). Hierbei kann bei gleicher Ausgestaltung der Stromrichteranordnung (1) die Ausgangsspannung der Solarzellenanordnung den doppelten maximalen Spannungswert aufweisen.

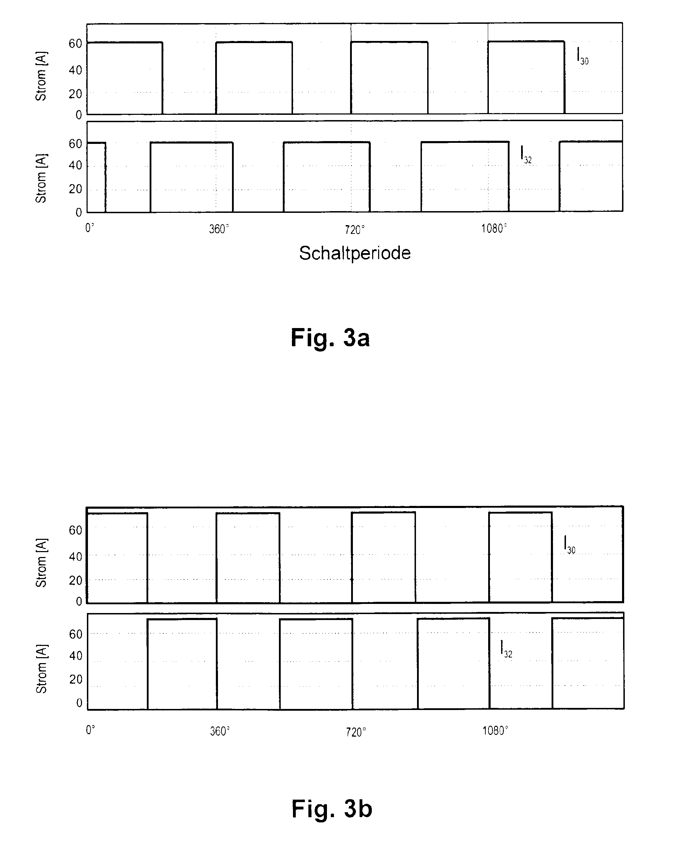

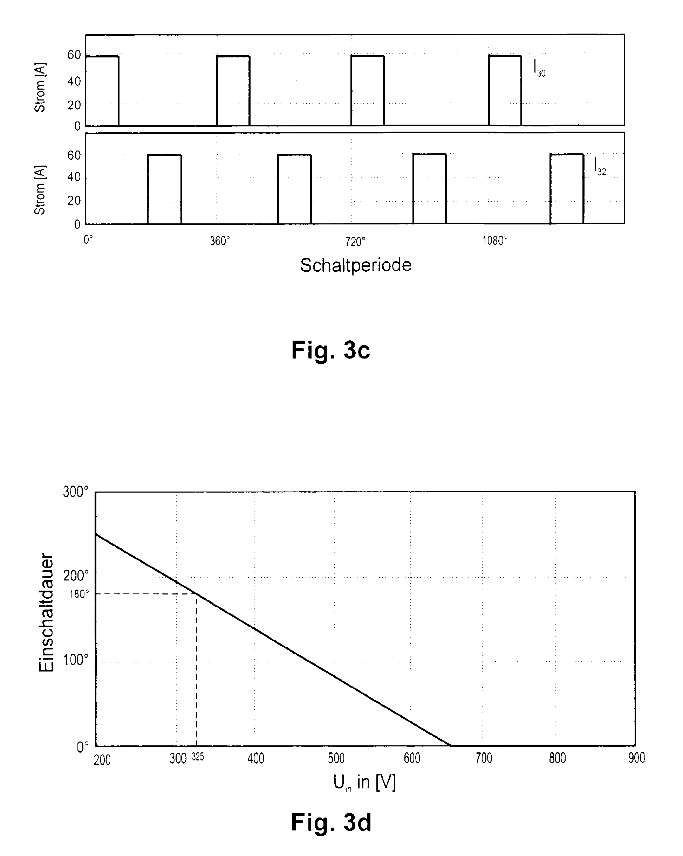

Fig. 3 zeigt verschiedene Spannungsverläufe bei Anwendung des erfindungsgemäßen Verfahrens zur Ansteuerung des Pegelwandlers unter der Bedingung, dass am Gleichspannungseingang eine Spannung anliegt, die geringer ist als die Sollzwischenkreisspannung. Dargestellt ist jeweils der Verlauf der Strömen I₃₀ und I₃₂ durch den ersten und zweiten Schalter (30, 32), also die Schaltzustände, am ersten und zweiten Schalter. Die Zahlenwert beziehen sich auf oben genanntes Beispiel mit einer Sollzwischenkreisspannung von 650V, die sich aus den Zielwert von 1 für den Modulationsfaktor und einer Ausgangswechselspannung von 3x400V ergeben.

In Fig. 3a basiert die Darstellung auf einer Eingangsspannung Uᵢₙ von 250V. Hieraus ergibt sich nach dem erfindungsgemäßen Verfahren bei einer Sollzwischenkreisspannung von 650V ein Sollwert der Kondensatorspannungen von je 325V. Dies wird erreicht, indem sich die Einschaltdauer auf 220° pro Schalter beläuft. Ein dauerhaft eingeschalteter Schalter hätte eine Einschaltdauer von 360°. Weiterhin sind die beiden Schalter um 180° gegeneinander versetzt, also alternieren geschaltet. Es ist ersichtlich, dass die jeweilige Einschaltdauer der beiden Schalter sich überlappen.

In Fig. 3b basiert die Darstellung auf einer Eingangsspannung Uᵢₙ von 325V. Hieraus ergibt sich nach dem erfindungsgemäßen Verfahren bei einer Sollzwischenkreisspannung von 650V ein Sollwert der Kondensatorspannungen von je 325V. Dies wird erreicht, indem sich die Einschaltdauer auf 180° pro Schalter beläuft. Weiterhin sind die beiden Schalter um 180° gegeneinander versetzt, also alternieren geschaltet, wodurch immer einer der beiden Schalter eingeschaltet ist.

In Fig. 3c basiert die Darstellung auf einer Eingangsspannung Uᵢₙ von 500V. Hieraus ergibt sich nach dem erfindungsgemäßen Verfahren bei einer Sollzwischenkreisspannung von 650V ein Sollwert der Kondensatorspannungen von je 325V. Dies wird erreicht, indem sich die Einschaltdauer auf 80° pro Schalter beläuft. Weiterhin sind die beiden Schalter um 180° gegeneinander versetzt, also alternieren geschaltet, wodurch es Phasen gibt zu denen keiner der beiden Schalter eingeschaltet ist.

Fig. 3d zeigt in einem Diagramm den Zusammenhang zwischen der Einschaltzeit eines der beiden Schalter und der Eingangsspannung Uᵢₙ. Es ist ersichtlich, dass mittels des erfindungsgemäßen Verfahrens alle Spannungswerte der Eingangsspannung Uᵢₙ zwischen 200V und 650V zu einer Sollzwischenkreisspannung führen. Bei Werten der Eingangsspannung Uᵢₙ oberhalb von 650V sind beide Schalter dauerhaft aus, wodurch auch die Zwischenkreisspannung über 650V steigt und ein Betrieb des Wechselrichters mit einem Modulationsfaktor von 1 nicht mehr möglich ist. Daher sollte die Solarzellenanordung derart dimensioniert werden, dass ihre Leerlaufspannung, also die maximale Eingangsspannung der Stromrichteranordnung, bei geringen Außentemperaturen einen Wert von 110 von 100 der Sollzwischenkreisspannung aufweisen.

## Patentansprüche

1. Stromrichteranordnung (1) mit einem zeitlich variierenden eine Maximalspannung aufweisenden Gleichspannungseingang, vorzugsweise aus einer Solarzellenanordnung (10), mit einem Pegelwandler (2) und mit mindestens einem mit einem Stromnetz (80) verbindbaren Wechselrichter (60)
wobei der positive Eingangspol des Gleichspannungseingang mit einem ersten Schalter (30) und der Anode einer ersten Diode (40) verbunden ist,
der negative Eingangspol des Gleichspannungseingang mit einem zweiten Schalter (32) und der Kathode einer zweiten Diode (42) verbunden ist
die Kathode der ersten Diode (40) mit einem ersten Kondensator (50), die Anode der zweiten Diode (42) mit einem zweiten Kondensator (52) verbunden ist und jeweils die beiden Schalter (30, 32) und die beiden Kondensatoren (50, 52) miteinander und deren Mittelanzapfungen miteinander verbunden sind und diese Anordnung den Pegelwandler (2) ausbildet der mit dem mindestens einen nachgeschalteten Wechselrichter (60) verbunden ist.

2. Stromrichteranordnung nach Anspruch 1,
wobei mindestens ein Eingangspol des Gleichspannungseingangs mit einer Spule (20, 22) verbindbar ist.

3. Stromrichteranordnung nach Anspruch 1,
wobei die Mittelanzapfungen der beiden Schalter (30, 32) und der beiden Kondensatoren mit Grundpotential (200) verbunden sind.

4. Stromrichteranordnung nach Anspruch 1,
wobei ein erster Wechselrichter mit dem ersten Kondensator und ein zweiter Wechselrichter mit dem zweiten Kondensator verbunden sind.

5. Stromrichteranordnung nach Anspruch 1,
wobei ein Wechselrichter mit dem Pegelwandler verbunden ist.

6. Verfahren zur Ansteuerung einer Stromrichteranordnung (1) nach einem der Ansprüche 1 bis 5, wobei der Pegelwandler solange am Gleichspannungseingang eine Spannung Uᵢₙ anliegt, die gleich oder höher ist als die Sollzwischenkreisspannung nicht angesteuert wird und wenn am Gleichspannungseingang eine Spannung anliegt, die geringer ist als die Sollzwischenkreisspannung der Pegelwandler derart angesteuert wird, dass sich ein Modulationsfaktor von 1 ergibt, hierdurch der erste (50) und zweite (52) Kondensator mit jeweils dem halben Wert der Sollzwischenkreisspannung (VdcS) geladen werden und hierzu
• bei einer Eingangsgleichspannung kleiner dem halben Wert der Sollzwischenkreisspannung (VdcS) der erste (30) und zweite (32) Schalter des Pegelwandlers (2) derart angesteuert werden, dass die Einschaltzeit der beiden Schalter (30, 32) überlappen und alternierend sind;
• bei einer Eingangsgleichspannung gleich dem halben Wert der Sollzwischenkreisspannung (VdcS) der erste (30) und zweite (32) Schalter des Pegelwandlers (2) derart angesteuert werden, dass die Einschaltzeit der beiden Schalter (30, 32) jeweils eine halbe Schaltperiode lang und alternierend sind;
• bei einer Eingangsgleichspannung größer dem halben Wert der Sollzwischenkreisspannung (VdcS) der erste (30) und zweite (32) Schalter des Pegelwandlers (2) derart angesteuert werden, dass die Einschaltzeit der beiden Schalter (30, 32) geringer als eine halbe Schaltperiode und alternierend sind.
